# EUROPÄISCHE PATENTSCHRIFT

(11) **EP 3 914 499 B1**
(45) Veröffentlichungstag und Bekanntmachung des Hinweises auf die Patenterteilung: **21.08.2024**
(21) Anmeldenummer: 20710771.5
(22) Anmeldetag: 24.02.2020
(51) Int. Cl.: B61L 15/00, B61L 3/06, B61L 3/12, B60T 1/10, B60T 13/66, B60T 17/22, F16D 61/00, B61L 27/20

(54) **VERFAHREN ZUM BETRIEB EINES FAHRERASSISTENZSYSTEMS FÜR EIN SPURGEBUNDENES FAHRZEUG**
METHOD FOR OPERATING A DRIVER ASSISTANCE SYSTEM FOR A TRACK-BOUND VEHICLE
PROCÉDÉ DE FONCTIONNEMENT D'UN SYSTÈME D'AIDE À LA CONDUITE POUR UN VÉHICULE GUIDÉ

(30) Priorität: 22.03.2019 DE 102019203919
(43) Veröffentlichungstag der Anmeldung: 01.12.2021
(73) Patentinhaber: Siemens Mobility GmbH, 81739 München (DE)
(72) Erfinder: FRENZKE, Thorsten, 91056 Erlangen (DE); GENSLER, Christoph, 91054 Erlangen (DE)
(74) Vertreter: Siemens Patent Attorneys
(86) Internationale Anmeldenummer: PCT/EP2020/054720
(87) Internationale Veröffentlichungsnummer: WO 2020/193033

(56) Entgegenhaltungen:
- EP-A1- 2 974 939
- WO-A1-2016/038063
- DE-A1- 102013 203 124
- JP-A- 2003 092 801
- US-A1- 2016 257 324
- US-A1- 2019 061 715
- LIESKOVSKY A ET AL: "ATO and ETCS can work together", RAILWAY GAZETTE INTERNATIONAL, REED BUSINESS INFORMATION, LONDON, GB, vol. 167, no. 3, 1 March 2011 (2011-03-01), pages 37 - 40, XP001560107, ISSN: 0373-5346
- W J COENRAAD: "Intermittent and Continuous Automatic Train Protection", RAILWAY SIGNALLING AND CONTROL SYSTEMS COURSE 2006, 1 January 2006 (2006-01-01), pages 94 - 131, XP055202734, Retrieved from the Internet <URL:http://ieeexplore.ieee.org/ielx5/11027/34785/01662117.pdf?tp=&arnumber=1662117&isnumber=34785> [retrieved on 20150716], DOI: 10.1049/ic:20080365

## Beschreibung

Die Erfindung betrifft ein Verfahren zum Betrieb eines Fahrerassistenzsystems für ein spurgebundenes Fahrzeug.

Grundsätzlich sind spurgebundene Fahrzeuge bekannt, die mehrere unterschiedliche Bremssysteme aufweisen. Beispielsweise haben spurgebundene Fahrzeuge häufig ein Druckluftbremssystem sowie ein elektrodynamisches Bremssystem. Bei dem elektrodynamischen Bremssystem werden Fahrmotoren zur Bremsung des Fahrzeugs als Generator betrieben, wobei eine Rückspeisung der Bremsenergie möglich ist. Das elektrodynamische Bremssystem entfaltet seine Wirkung ausschließlich an den angetriebenen Achsen des Fahrzeugs. Dabei nimmt die maximale Bremskraft des elektrodynamischen Bremssystems üblicherweise bei hohen Geschwindigkeiten mit steigender Fahrzeuggeschwindigkeit ab. Im Gegensatz dazu lassen sich mit einem Druckluftbremssystem auch bei hohen Fahrzeuggeschwindigkeiten hohe Bremskräfte erzielen. Aus diesem Grund wird bei höheren Geschwindigkeiten die fehlende elektrodynamische Bremskraft üblicherweise durch das Druckluftbremssystem kompensiert. Da allgemein beim Betrieb eines spurgebundenen Fahrzeugs ein möglichst geringer Energieverbrauch sowie ein möglichst geringer Bremsverschleiß angestrebt wird, ist es wünschenswert, dass das elektrodynamische Bremssystem bevorzugt gegenüber dem Druckluftbremssystem zum Einsatz kommt.

Zudem sind Fahrerassistenzsysteme bekannt, die einen Fahrzeugführer durch Ausgabe von Fahrempfehlungen bei einem energie- und verschleißarmen Betrieb des spurgebundenen Fahrzeugs unterstützen.

WO 2016/038063A1 beschreibt ein Schienenfahrzeug mit einem Satz von Betriebsmittelsubsystemen und einer Führerstandanzeigevorrichtung zur Anzeige von Informationen an den Fahrzeugführer, die zumindest eine zentrale Anzeigeeinheit aufweist. Die Führerstandanzeigevorrichtung weist eine der Anzeigeeinheit vorgeschaltete Steuereinheit auf, die dazu vorgesehen ist, einen auf mehrere Betriebsmittelsubsysteme bezogenen, dynamischen Informationsgehalt für die Anzeigeeinheit zu regulieren. Ein Regulierungsvorgang der Steuereinheit umfasst das Prüfen zumindest einer Bedingung und eine Informationsbehandlung in Abhängigkeit eines Prüfergebnisses. Dabei betrifft eine Bedingung des Regulierungsvorgangs das Eintreten eines Betriebsereignisses und die Informationsbehandlung umfasst eine Anzeige von Informationen in Abhängigkeit eines Prüfergebnisses. Die Betriebsmittelsubsysteme gehören beispielsweise zur Gruppe von Systemen, die von einer Zugsicherung gebildet sind.

DE 10 2013 203 124 A1 beschreibt ein Schienenfahrzeug mit einer Tachometer-Geschwindigkeitsanzeigeeinrichtung und mit einer ETCS-Geschwindigkeitsanzeigeeinrichtung. Die Glasabdeckung der Tachometer-Geschwindigkeitsanzeigeeinrichtung ist eine elektrochrome Glasscheibe mit einer elektrischen Anschlusseinrichtung.

US 2016/0257324 A1 beschreibt ein Verfahren zum Betrieb eines Schienenfahrzeugs auf einem Streckennetz, welche eine oder mehrere Fahrzeugrouten bildet. Das Verfahren umfasst die Schritte: Bereitstellen einer Fahrzeugstatusinformation, welche den aktuellen Streckenort des Fahrzeugs enthält; Bereitstellen der durch das Fahrzeug zu befahrenden Route; Bereitstellen einer Betriebsprofilinformation bezüglich Fahrzeugbetriebsempfehlungen und/oder Vorgaben für Streckenorte und Fahrzeugrouten; Ermitteln eines Betriebsrisikos für das Fahrzeug aus der Fahrzeugstatusinformation; Ermitteln einer durch das Fahrzeug zu befahrenden Route und Ermitteln der Betriebsprofilinformation, wobei jedes Betriebsrisiko die Wahrscheinlichkeit ist, dass ein zukünftiger Fahrzeugbetrieb von einer Betriebsprofilinformation in einem vorgegebenen Abschnitt der Strecke oder einem vorgegebenen Ort auf der Route abweicht; Erzeugen von empfehlenden Hinweisen für einen Fahrer des Fahrzeugs auf Basis des Betriebsrisikos. Dabei reduziert jeder empfehlende Hinweis, wenn er durch den Fahrer befolgt wird, die Wahrscheinlichkeit, eines zukünftigen Fahrzeugbetriebs, welcher von der Betriebsprofilinformation abweicht. EP 2 974 939 A1 beschreibt ein Zugverwaltungssystem, welches eine fahrzeugseitige Servereinheit eines vorgegebenen Zugs aufweist. Ferner weist das Zugverwaltungssystem ein Schienenverkehrsbetriebszentrum auf, enthaltend: (i) eine Streckenüberwachungseinheit, welche Orte von Zügen und Status von streckenseitigen Signalanlagen überwacht und Signaleinstellungen erzeugt, die von den Signalanlagen auf Basis der aktuellen Zugorte und aktuellen Status der streckenseitigen Signalanlagen erlassen werden; und (ii) eine Zeitplanaktualisierungseinheit, welche Zeitpläne für Züge auf Basis der aktuellen Zugorte aktualisiert. Dabei enthält das Zugverwaltungssystem ferner ein Berechnungsmodul, welches wiederholt ein empfohlenes Geschwindigkeitsprofil - während der vorgegebene Zug fährt - für den vorgegebenen Zug, kompatibel mit dem aktuellsten aktualisierten Zeitplan für den vorgegebenen Zug und aktuellsten aktualisierten Signal von den Signaleinstellungen berechnet. Dabei zeigt die fahrzeugseitige Servereinheit das aktuellste empfohlene Geschwindigkeitsprofil als Vorschlag für den Fahrer des Zugs.

Vor diesem Hintergrund ist es Aufgabe der vorliegenden Erfindung, das Verfahren zum Betrieb eines Fahrerassistenzsystems zu verbessern. Insbesondere ist es Aufgabe der vorliegenden Erfindung, einen sicheren Betrieb des Fahrzeugs mit einem Fahrerassistenzsystem von hoher Integrität zu erzielen.

Diese Aufgabe wird durch ein Verfahren gemäß Anspruch 1 gelöst.

Der Erfindung liegt die Erkenntnis zugrunde, dass bisherige Fahrerassistenzsysteme für spurgebundene Fahrzeuge als sogenannte Add-on-Systeme ausgebildet sind, die Fahrempfehlungen alleinstehend ausgeben und datentechnisch nicht in das spurgebundene Fahrzeug integriert sind. Bisherige Fahrerassistenzsysteme, die datentechnisch in das spurgebundene Fahrzeug integriert sind, haben keine unmittelbare oder mittelbare Kenntnis über Signalzustände des Zugbeeinflussungssystems, so dass Widersprüche zwischen dem Inhalt von Fahrempfehlungen, die mittels des Fahrerassistenzsystems ausgegeben werden, und dem Inhalt (z.B. Signalbegriff) eines landseitigen Streckensignals entstehen können. Durch den Betrieb des Fahrerassistenzsystems in Abhängigkeit des Zugbeeinflussungssignals werden diese Widersprüche behoben und folglich die Integrität des Fahrerassistenzsystems erhöht und die Sicherheit beim Betrieb des Fahrzeugs erhöht.

Das spurgebundene Fahrzeug ist vorzugsweise ein Schienenfahrzeug, weiter vorzugsweise ein Triebzug. Der Fachmann versteht den Begriff "Triebzug" vorzugsweise als eine betrieblich fest gekuppelte oder gelenkig verbundene Einheit aus mehreren Fahrzeugen oder Kastenelementen.

Das Zugbeeinflussungssystem besteht aus Komponenten im Fahrzeug und vorzugsweise zusätzlich aus landseitigen Komponenten, die mit den Komponenten des Fahrzeugs wechselwirken.

Das Zugbeeinflussungssignal kann ein analoges und/oder digitales Signal umfassen. Das Zugbeeinflussungssignal dient vorzugsweise zur Kontrolle des Fahrtbetriebs des Fahrzeugs. Der Inhalt des Zugbeeinflussungssignals entspricht vorzugsweise dem Signalbegriff des landseitigen optischen Streckensignals. Vorzugsweise wird das Zugbeeinflussungssignal mittels einer Fahrzeugeinrichtung des Zugbeeinflussungssystems erzeugt.

Das Betreiben des Fahrerassistenzsystems in Abhängigkeit des Zugbeeinflussungssignals wird vorzugsweise mittels einer Fahrzeugsteuereinrichtung des spurgebundenen Fahrzeugs gesteuert. Vorzugsweise ist die Fahrzeugsteuereinrichtung eine zentrale Fahrzeugsteuereinrichtung des spurgebundenen Fahrzeugs.

Gemäß einer bevorzugten Ausführungsform des erfindungsgemäßen Verfahrens wird ein Anzeigen einer Fahrerassistenzinformation mittels einer Fahrerassistenzanzeigeeinheit des Fahrerassistenzsystems in Abhängigkeit des Zugbeeinflussungssignals gesteuert. Dadurch wird die Integrität der mittels der Fahrerassistenzanzeigeeinheit angezeigten Fahrerassistenzinformation erhöht. Widersprüche zwischen dem Inhalt der Fahrerassistenzinformation und dem Inhalt des Zugbeeinflussungssignals bzw. landseitigen optischen Streckensignal werden durch die Steuerung der Anzeige in Abhängigkeit des Zugbeeinflussungssignals behoben.

Bei einer bevorzugten Weiterbildung ist die Fahrerassistenzanzeigeeinheit in ein Führerpult des spurgebundenen Fahrzeugs integriert, wobei eine Zugbeeinflussungsinformation mittels einer Zugbeeinflussungsanzeigeeinheit, die in das Führerpult des spurgebundenen Fahrzeugs integriert ist, angezeigt wird und die Zugbeeinflussungsinformation anhand des Zugbeeinflussungssignals erzeugt wird. Das erfindungsgemäße Verfahren ist für die weiterbildungsgemäße Konstellation besonders vorteilhaft, da ein Widerspruch zwischen der Anzeige der Zugbeeinflussungsinformation mittels der Zugbeeinflussungsanzeigeeinheit und der Anzeige der Fahrerassistenzinformation mittels der Fahrerassistenzanzeigeeinheit entstehen kann. Dieser Widerspruch kann durch das Steuern der Anzeige der Fahrerassistenzinformation behoben werden. Dies erhöht bei Fahrzeugführern die Akzeptanz der angezeigten Fahrerassistenzinformationen.

Das Führerpult ist vorzugsweise innerhalb eines Führerstands des spurgebundenen Fahrzeugs angeordnet. Der Begriff "Führerstand" ist vorzugsweise als Bereich - z. B. ein von einem Fahrgastbereich abgetrennter Raum - innerhalb des Fahrzeugs zu verstehen, welcher für einen Fahrzeugführer vorgesehen ist. Beispielsweise ist der Führerstand zur Steuerung des Fahrzeugs durch den Fahrzeugführer im Fahrtbetrieb vorgesehen.

Die Zugbeeinflussungsanzeigeeinheit wird fachmännisch häufig als Driver Machine Interface (DMI) bezeichnet.

Bei einer weiteren Weiterbildung repräsentiert die Fahrerassistenzinformation eine Fahrempfehlung, wobei die Fahrempfehlung ausgeblendet wird und/oder eine Hinweismeldung, welche auf das Zugbeeinflussungssignal hinweist, angezeigt wird, wenn das Zugbeeinflussungssignal eine Restriktion des Betriebs des spurgebundenen Fahrzeugs auslöst. Durch das Ausblenden einer Fahrempfehlung, welche möglicherweise im Widerspruch zu einer mittels der Zugbeeinflussungsanzeigeeinheit angezeigten Zugbeeinflussungsinformation steht, wird die Akzeptanz der mittels des Fahrerassistenzsystems angezeigten Fahrempfehlungen erhöht.

Der Fachmann versteht den Begriff "Restriktion" vorzugsweise dahingehend, dass der Betrieb des spurgebundenen Fahrzeugs beschränkt wird. Die Restriktion kann beispielsweise einen Eingriff in den Betrieb des Fahrzeugs umfassen, welcher beispielsweise ein Halt zeigendes Signal ist.

Der Fachmann versteht die Formulierung, wonach die Fahrempfehlung ausgeblendet wird, vorzugsweise dahingehend, dass die Fahrempfehlung auf das Ausblenden hin mittels der Fahrerassistenzanzeigeeinheit nicht mehr angezeigt wird.

Vorzugsweise wird die Fahrempfehlung nach dem Verschwinden der Restriktionen wieder eingeblendet. Weiter vorzugsweise wird das Wiedereinblenden der Fahrempfehlung automatisiert oder durch eine Betätigung des Fahrzeugführers ausgelöst.

Das Ausblenden und/oder Wiedereinblenden der Fahrempfehlung wird vorzugsweise mittels der oben beschriebenen Fahrzeugsteuereinrichtung gesteuert.

Der Fachmann versteht die Hinweismeldung, welche auf das Zugbeeinflussungssignal hinweist, vorzugsweise dahingehend, dass der Fahrzeugführer anhand der Hinweismeldung darauf aufmerksam gemacht wird, dass ein Zugbeeinflussungssignal vorliegt und ein entsprechenden landseitiges Streckensignal durch den Fahrzeugführer zu beachten ist.

Gemäß einer bevorzugten Weiterbildung umfasst die Restriktion eine Geschwindigkeitsüberwachung der Fahrtgeschwindigkeit des spurgebundenen Fahrzeugs.

Bei der Geschwindigkeitsüberwachung durch das Zugbeeinflussungssystem erfolgt ein Eingriff in den Betrieb des Fahrzeugs vorzugsweise bei Überschreiten einer vorgegebenen Fahrtgeschwindigkeit. Die vorgegebene Fahrtgeschwindigkeit hängt beispielsweise von der nach der Beeinflussung zurückgelegten Strecke ab.

Die Geschwindigkeitsüberwachung ist beispielsweise eine sogenannte 1 000 Hz-Überwachung einer punktförmigen Zugbeeinflussung, insbesondere der Variante PZB 90. Nach der 1 000-Hz-Beeinflussung muss der Fahrzeugführer eine Wachsamkeitstaste bedienen, da sonst eine Zwangsbremsung ausgelöst wird. Anschließend erfolgt in Abhängigkeit von der Art des Fahrzeugs und in Abhängigkeit von der Zeit eine kontinuierliche Geschwindigkeitsüberwachung auf einer Strecke von 1.250 m nach der Beeinflussung.

Die erfindungsgemäße Lösung ist bei der Konstellation gemäß Weiterbildung besonders vorteilhaft, da die Geschwindigkeitsüberwachung eine Situation darstellt, die dem Fahrzeugführer gewisse Freiräume bei der Regelung der Geschwindigkeit, insbesondere beim Bremsen, lässt. In dieser Situation sind insbesondere Geschwindigkeitsempfehlungen des Fahrerassistenzsystems besonders problematisch, die suggerieren, dass das Fahrzeug mit einer höheren Geschwindigkeit betrieben werden kann, als es vor dem Hintergrund der Geschwindigkeitsüberwachung sinnvoll wäre. Denn Ziel der Geschwindigkeitsüberwachung ist es in der Regel, ein Abbremsen des Fahrzeugs auf eine vordefinierte Geschwindigkeit zu überwachen. Fahrempfehlungen des Fahrerassistenzsystems, die unabhängig von dem Zugbeeinflussungssignals ausgegeben werden, können bei dem Fahrzeugführer ein verzögertes Abbremsen befördern und im Ergebnis sogar zu einer Zwangsbremsung führen.

Eine weitere bevorzugte Ausführungsform des erfindungsgemäßen Verfahrens ist gekennzeichnet durch Betreiben des spurgebundenen Fahrzeugs in einem energiesparenden Betriebsmodus und Betreiben des Fahrerassistenzsystems in Abhängigkeit des energiesparenden Betriebsmodus, wobei der energiesparende Betriebsmodus verlassen wird, wenn das Zugbeeinflussungssignal eine Restriktion des Betriebs des spurgebundenen Fahrzeugs auslöst.

Der Fachmann versteht den Begriff "energiesparender Betriebsmodus" vorzugsweise als einen Betrieb des spurgebundenen Fahrzeugs, bei dem das Antriebssystem und/oder Bremssystems des Fahrzeugs energiesparend gesteuert wird. So werden beispielsweise vergleichsweise hohe Beschleunigungen vermieden und die Bremsleistung zur Verlustminimierung begrenzt. Die Begrenzung der Bremsleistung im energiesparenden Betriebsmodus kann jedoch zu einer Verlängerung des Bremswegs führen. Da der Fahrzeugführer darin aufgrund der Gefahr des Überfahrens eines Signals, das einen Halt zeigt, ein erhöhtes Risiko einer Zwangsbremsung sieht, ist die Tendenz des Fahrzeugführers, den energiesparenden Betriebsmodus einzusetzen, vergleichsweise gering. Dadurch wird die Tendenz des Fahrzeugführers, den energiesparenden Betriebsmodus zu nutzen, gesteigert. Denn der Triebfahrzeugführer darf von einem Verlassen des energiesparenden Betriebsmodus ausgehen, wenn das Zugbeeinflussungssignal eine Restriktion des Betriebs des spurgebundenen Fahrzeugs auslöst.

Der Fachmann versteht die Formulierung "Betreiben des Fahrerassistenzsystems in Abhängigkeit des energiesparenden Betriebsmodus" vorzugsweise dahingehend, dass mittels des Fahrerassistenzsystems ausgegebene Fahrempfehlungen einen energiesparenden Betrieb des Fahrzeugs unterstützen. Vorzugsweise wird der energiesparende Betriebsmodus nach dem Verschwinden der Restriktionen wieder eingenommen. Weiter vorzugsweise wird das Wiedereinnehmen des energiesparenden Betriebsmodus automatisiert oder durch eine Betätigung des Fahrzeugführers ausgelöst.

Das Verlassen und/oder Wiedereinnehmen des energiesparenden Betriebsmodus wird vorzugsweise mittels der oben beschriebenen Fahrzeugsteuereinrichtung gesteuert.

Nach einer weiteren bevorzugten Weiterbildung weist das spurgebundene Fahrzeug ein Druckluftbremssystem und ein elektrodynamisches Bremssystem mit einer Bremsenergierückgewinnung auf, wobei der energiesparende Betriebsmodus ein Betriebsmodus ist, bei welchem ausschließlich das elektrodynamische Bremssystem zum Bremsen des Fahrzeugs verwendet wird.

Dieser Weiterbildung liegt die Erkenntnis zugrunde, dass Fahrempfehlungen eines Fahrerassistenzsystems für den energiesparenden Betriebsmodus häufig auf eine ausschließliche Nutzung des elektrodynamischen Bremssystems abgestimmt sind. Denn bei der ausschließlichen Nutzung des elektrodynamischen Bremssystems wird eine maximale Rückspeisung der Bremsenergie erzielt. Es werden nämlich keine Druckluftbremsen verwendet, bei denen die Bremsenergie durch Reibung ausschließlich in Wärme umgewandelt wird.

Die ausschließliche Nutzung der elektrodynamischen Bremse führt jedoch zu der folgenden Problemstellung: Die maximale Gesamtbremskraft kann geringer sein als bei der Druckluftbremse, die häufig an sämtlichen Achsen des Fahrzeugs vorhanden ist und eine hohe Bremskraft auch bei vergleichsweise hohen Geschwindigkeiten erzielt. Gleichzeitig ist bei der elektrodynamischen Bremse eine vergleichsweise hohe Haftwertausnutzung pro gebremster Achse erforderlich, da die elektrodynamische Bremse wiederum ausschließlich an den angetriebenen Achsen vorhanden ist.

Die vorstehend beschriebene Ausführungsform ist besonders vorteilhaft für die Konstellation gemäß Weiterbildung, da die in dieser Konstellation auftretenden Problemstellungen besonders einfach behoben werden.

Der Fachmann versteht den Begriff "Druckluftbremssystem" vorzugsweise als ein System, bei dem Druckluft als Energieträger sowie zur Steuerung des Bremsvorgangs verwendet wird. Die Bremswirkung wird vorzugsweise durch Anpressen von Bremsklötzen auf die Laufflächen der Räder oder auf Bremsscheiben ausgeübt.

Bei einer weiteren bevorzugten Weiterbildung wird die Gesamtbremskraft bei Verlassen des energiesparenden Betriebsmodus auf eine höhere Anzahl von Achsen als im energiesparenden Betriebsmodus verteilt. Dadurch wird die erforderliche Haftwertausnutzung pro gebremster Achse verringert.

Bei einer weiteren bevorzugten Weiterbildung wird der energiesparende Modus automatisch verlassen, wenn die Fahrzeugsteuereinrichtung das Überschreiten der Haftwertausnutzung erkennt.

Vorzugsweise wird die Gesamtbremskraft beim Verlassen des energiesparenden Betriebs auf sämtliche Achsen verteilt. Dazu werden vorzugsweise die angetriebenen Achsen mittels des elektrodynamischen Bremssystems gebremst und die nichtangetriebenen Achsen mittels des Druckluftbremssystems gebremst. Alternativ oder zusätzlich wird die Gesamtbremskraft auf sämtliche Achsen des spurgebundenen Fahrzeugs verteilt, indem sämtliche Achsen mittels des Druckluftbremssystems gebremst werden.

Das erfindungsgemäße Verfahren ist gekennzeichnet durch Betreiben des spurgebundenen Fahrzeugs in einem energiesparenden Betriebsmodus, Nachbilden einer mittels des Zugbeeinflussungssystems erzeugten Überwachungskurve mittels einer Fahrzeugsteuereinrichtung, wobei anhand der nachgebildeten Überwachungskurve mittels der Fahrzeugsteuereinrichtung ermittelt wird, ob der energiesparende Betriebsmodus verlassen wird.

Der Erfindung liegt die Erkenntnis zugrunde, dass Zugbeeinflussungssysteme, wie beispielsweise PZB 90 oder ETCS (European Train Control System), zur Überwachung, beispielsweise der 1 000 Hz-Überwachung, eine Überwachungskurve berechnen.

Der Fachmann versteht den Begriff "Überwachungskurve" vorzugsweise als funktionalen Zusammenhang der Fahrtgeschwindigkeit des bremsenden Fahrzeugs in Abhängigkeit der von dem Fahrzeug zurückgelegten Strecke. Die mittels des Zugbeeinflussungssystems berechnete Überwachungskurve wird zum kontinuierlichen Vergleich der tatsächlichen Geschwindigkeit mit der aktuell zulässigen Geschwindigkeit genutzt, wobei bei Überschreitung der aktuell zulässigen Geschwindigkeit eine Zwangsbremsung ausgelöst wird.

Gemäß der Erfindung wird die Überwachungskurve des Zugbeeinflussungssystems nachgebildet. Anhand der nachgebildeten Überwachungskurve kann die Fahrzeugsteuereinrichtung das Bremsverhalten des Fahrzeugs im energiesparenden Betriebsmodus überwachen und prognostizieren, ob das zu erwartende Bremsverhalten im energiesparenden Betriebsmodus zur Einhaltung der Überwachungskurve ausreicht. Wird im energiesparenden Betriebsmodus beispielsweise zu zögerlich gebremst, so dass ein Überschreiten der durch die Überwachungskurve vorgegebenen Fahrtgeschwindigkeit zu erwarten ist, wird der energiesparende Betriebsmodus verlassen, um eine höhere Gesamtbremskraft auf die Achsen des Fahrzeugs auszuüben.

Das Zugbeeinflussungssystem kann eine punktförmige oder linienförmige Zugbeeinflussung, z.B. ETCS-Zugbeeinflussung Level 2, umfassen. Gemäß einer bevorzugten Ausführungsform des erfindungsgemäßen Verfahrens umfasst das Zugbeeinflussungssystem eine induktive Zugbeeinflussung, vorzugsweise eine punktförmige Zugbeeinflussung.

Vorzugsweise ist die punktförmige Zugbeeinflussung eine punktförmige Zugbeeinflussung der Variante PZB 90.

Gemäß einer weiteren bevorzugten Ausführungsform des erfindungsgemäßen Verfahrens wird das Zugbeeinflussungssignal mittels einer Fahrzeugeinrichtung des Zugbeeinflussungssystems erzeugt und ausgehend von der Fahrzeugeinrichtung an eine Fahrzeugsteuereinrichtung übertragen, wobei die Fahrzeugsteuereinrichtung das Anzeigen der Fahrerassistenzinformation in Abhängigkeit des Zugbeeinflussungssignals steuert.

Bei einer bevorzugten Weiterbildung erfasst die Fahrzeugeinrichtung des Zugbeeinflussungssystems, dass das spurgebundene Fahrzeug eine Streckeneinrichtung des Zugbeeinflussungssystems passiert, wobei das Zugbeeinflussungssignal in Abhängigkeit der passierten Streckeneinrichtung erzeugt wird.

Die Streckeneinrichtung ist vorzugsweise ein Gleismagnet einer punktförmigen Zugbeeinflussung. Das spurgebundene Fahrzeug umfasst vorzugsweise einen Fahrzeugmagneten, welcher einen Schwingkreis umfasst. Der Schwingkreis wird weiter vorzugsweise mit Wechselstrom der Frequenzen 500, 1 000 und 2 000 Hz gespeist. Bei dem Passieren der Streckeneinrichtung induziert der Fahrzeugmagnet in dem Gleismagneten einen Stromfluss. Ist der Gleismagnet auf die Frequenz des Schwingkreises des Fahrzeugs abgestimmt (z.B. 500, 1 000 oder 2 000 Hz), bewirkt eine Resonanz, dass dem Schwingkreis des Fahrzeugs über den Fahrzeugmagneten Energie entzogen wird. Dies führt zu einem Stromabfall im Fahrzeugmagneten, welcher mittels der Fahrzeugeinrichtung erfasst wird.

Der Fachmann versteht die Formulierung, wonach das Zugbeeinflussungssignal in Abhängigkeit der passierten Streckeneinrichtung erzeugt wird, vorzugsweise dahingehend, dass das Zugbeeinflussungssignal in Abhängigkeit der Resonanzfrequenz, auf die der Streckenmagnet abgestimmt ist, erzeugt wird.

Bei einer Ausführung des Zugbeeinflussungssystems als punktförmige Zugbeeinflussung der Variante PZB 90 haben die Streckenmagneten folgende Bedeutung: Ein auf die Resonanzfrequenz 1 000 Hz abgestimmter Streckenmagnet steht für ein landseitiges Vorsignal, welches anzeigt, dass ein Hauptsignal zu erwarten ist, welches einen Halt oder eine starke Geschwindigkeitsverringerung anzeigt. Ein auf die Resonanzfrequenz 500 Hz abgestimmter Streckenmagnet bewirkt beim Passieren des spurgebundenen Fahrzeugs eine kontinuierliche wegabhängige Geschwindigkeitsüberwachung auf den folgenden 250 m. Ein auf die Resonanzfrequenz 2 000 Hz abgestimmter Streckenmagnet steht für ein Hauptsignal. Zeigt das Hauptsignal einen Halt an, wird unmittelbar auf das Passieren dieser Streckeneinrichtung eine Zwangsbremse ausgelöst.

Die Erfindung betrifft ferner ein Computerprogramm mit Programmcode zur Durchführung des Verfahrens der vorstehend beschriebenen Art, wenn das Computerprogramm auf einer Recheneinheit einer Fahrzeugsteuereinrichtung ausgeführt wird.

Die Erfindung betrifft ferner eine Fahrzeugsteuereinrichtung für ein spurgebundenes Fahrzeug mit einem Fahrerassistenzsystem, umfassend: eine datentechnische Schnittstelle zum Empfangen eines mittels eines Zugbeeinflussungssystems erzeugten Zugsicherungssignals, wobei die Fahrzeugsteuereinrichtung ausgebildet ist, das Fahrerassistenzsystem in Abhängigkeit des über die Schnittstelle empfangenen Zugsicherungssignals zu steuern.

Die Erfindung betrifft ferner ein Fahrerassistenzsystem für ein spurgebundenes Fahrzeug, welches ausgebildet ist, in Abhängigkeit eines mittels eines Zugbeeinflussungssystems erzeugten Zugbeeinflussungssignals betrieben zu werden.

Zu Vorteilen, Ausführungsformen und Ausführungsdetails der Merkmale des erfindungsgemäßen Computerprogramms, der erfindungsgemäßen Fahrzeugsteuereinrichtung und des erfindungsgemäßen Fahrerassistenzsystems kann auf die obige Beschreibung zu den entsprechenden Merkmalen des erfindungsgemäßen Verfahrens verwiesen werden.

Es werden Ausführungsbeispiele der Erfindung anhand der Zeichnungen näher erläutert. Es zeigen:
- Figur 1: schematisch den Aufbau eines spurgebundenen Fahrzeugs kompatibel mit einem Ausführungsbeispiel der Erfindung,
- Figur 2: schematisch den datentechnischen Aufbau eines Fahrerassistenzsystems des in Figur 1 gezeigten Fahrzeugs mit einem Zugbeeinflussungssystem,
- Figur 3: eine perspektivische Draufsicht auf ein Führerpult kompatibel mit der Erfindung,
- Figur 4: ein schematisches Ablaufdiagramm kompatibel mit einem ersten Ausführungsbeispiel des erfindungsgemäßen Verfahrens,

- Figur 5: ein schematisches Ablaufdiagramm kompatibel mit einem zweiten Ausführungsbeispiel des erfindungsgemäßen Verfahrens und

- Figur 6: ein schematisches Ablaufdiagramm eines dritten Ausführungsbeispiels des erfindungsgemäßen Verfahrens.

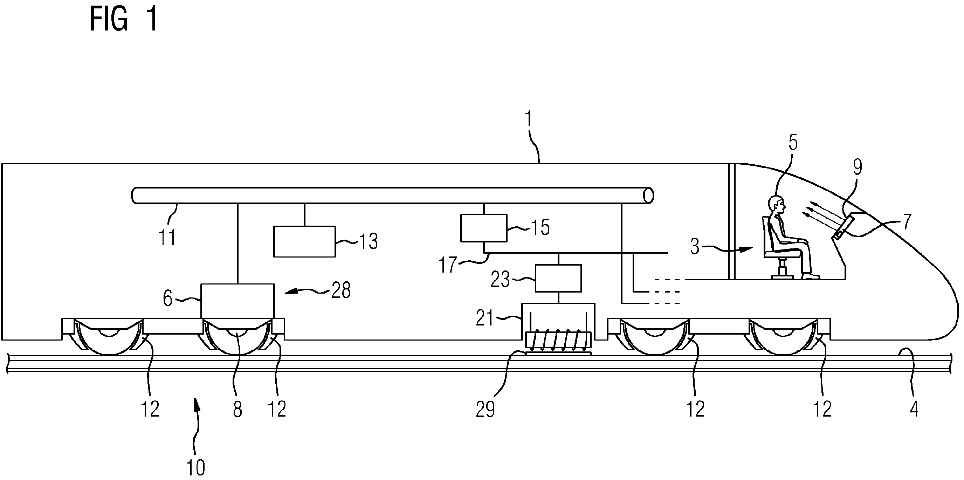

Figur 1 zeigt in einer seitlichen schematischen Ansicht ein spurgebundenes Fahrzeug 1, welches als Schienenfahrzeug zur Beförderung von Fahrgästen ausgebildet ist. Das spurgebundene Fahrzeug 1 weist eine Antriebseinheit 6 auf, welche nicht näher dargestellte elektrische Fahrmotoren umfasst, die jeweils zum Antreiben zumindest einer Triebachse 8 dienen. Die Antriebseinheit 6 kann in einem Traktionsmodus zum Antreiben des spurgebundenen Fahrzeugs 1 und einem elektrischen Bremsmodus zum Bremsen des spurgebundenen Fahrzeugs 1 betrieben werden. Die Antriebseinheit 6 ist Teil eines elektrodynamischen Bremssystems 28. Das spurgebundene Fahrzeug 1 weist zudem ein Druckluftbremssystem 10 mit einer Mehrzahl von Bremsklötzen 12 auf, welche eine Bremswirkung durch Anpressen auf die Laufflächen der Räder oder auf Bremsscheiben ausüben.

In einem von einem Fahrgastbereich abgetrennten Raum des spurgebundenen Fahrzeugs 1 ist ein Führerstand 3 vorhanden, welcher von einer Person, nämlich einem Fahrzeugführer 5, für die Steuerung des spurgebundenen Fahrzeugs 1 genutzt wird.

Eine Fahrerassistenzanzeigeeinheit 7 ist in ein Führerpult 9 des Führerstands 3 integriert. Mittels der Fahrerassistenzanzeigeeinheit 7 können dem Fahrzeugführer 5 als Betrachter Fahrerassistenzinformationen angezeigt werden. Beispielsweise entnimmt der Fahrzeugführer 5 einer angezeigten Fahrerassistenzinformation eine Fahrempfehlung für den Betrieb des spurgebundenen Fahrzeugs 1. Die Fahrempfehlung umfasst beispielsweise eine Geschwindigkeitsempfehlung.

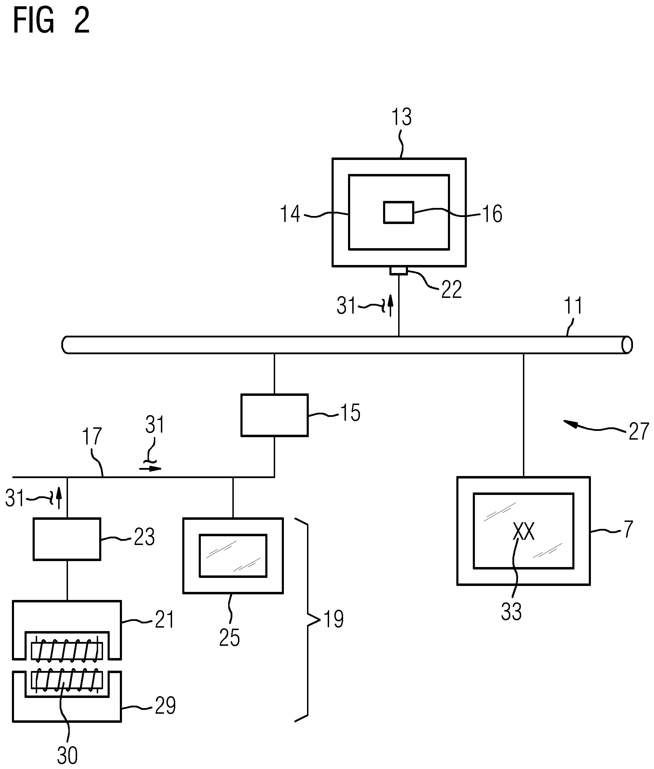

Figur 2 zeigt schematisch den datentechnischen Aufbau eines Fahrerassistenzsystems 27 mit einem als Ethernet ausgestalteten Fahrzeugsteuernetz 11. An das Fahrzeugsteuernetz 11 ist eine Fahrzeugsteuereinrichtung 13 und die Fahrerassistenzanzeigeeinheit 7 datentechnisch angeschlossen. Die an das Fahrzeugsteuernetz 11 angeschlossenen Komponenten sind über datentechnische Schnittstellen an das Fahrzeugsteuernetz 11 angebunden. Beispielsweise weist die Fahrzeugsteuereinrichtung 13 eine datentechnische Schnittstelle 22 zur datentechnischen Anbindung an das Fahrzeugsteuernetz 11 auf.

Die Fahrerassistenzanzeigeeinheit 7 und die Fahrzeugsteuereinrichtung 13 bilden Elemente eines Fahrerassistenzsystems 27.

Eine Gateway-Einheit 15 stellt eine datentechnische Anbindung eines Fahrzeugbusses 17 an das Fahrzeugsteuernetz 11 zur Verfügung. Der Fahrzeugbus 17 ist als sogenannter Multifunction Vehicle Bus (MVB) ausgestaltet. Die Gateway-Einheit 15 zur Anbindung des Multifunction Vehicle Bus wird fachmännisch häufig als MVB-Link bezeichnet. An den Fahrzeugbus 17 ist ein Teil eines Zugbeeinflussungssystems 19 angeschlossen. Das Zugbeeinflussungssystem 19 umfasst einen Fahrzeugmagneten 21, eine Fahrzeugeinrichtung 23, eine Zugbeeinflussungsanzeigeeinheit 25 sowie wenigstens eine Streckeneinrichtung 29.

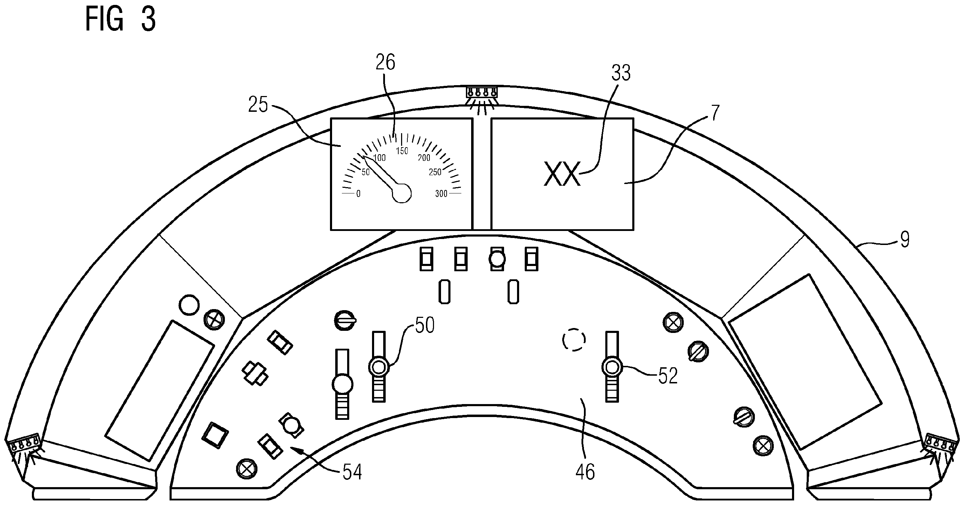

Figur 3 zeigt die Anordnung der Zugbeeinflussungsanzeigeeinheit 25 und der Fahrerassistenzanzeigeeinheit 7 an dem Führerpult 9. Das in Figur 3 gezeigte Führerpult 9 dient als Trägereinheit für eine Führerpultbetätigungseinrichtung 46, welche einen Satz von Bedienmitteln aufweist, über welche der Fahrzeugführer 5 verschiedene Steuerbefehle eingeben kann. Typische Steuerbefehle sind die Eingabe einer Traktionsstufe mittels eines ersten, als Bedienhebel ausgebildeten Bedienmittels 50 und die Eingabe einer Bremsstufe mittels eines weiteren, als Bedienhebel ausgebildeten Bedienmittels 52. Über weitere, als Taste ausgebildete Bedienmittel 54 kann der Fahrzeugführer seine Wachsamkeit bei Aufforderung des Zugbeeinflussungssystems 19 quittieren. Das Führerpult 9 ist mit weiteren, im Einzelnen nicht näher beschriebenen Bedienmitteln ausgestattet.

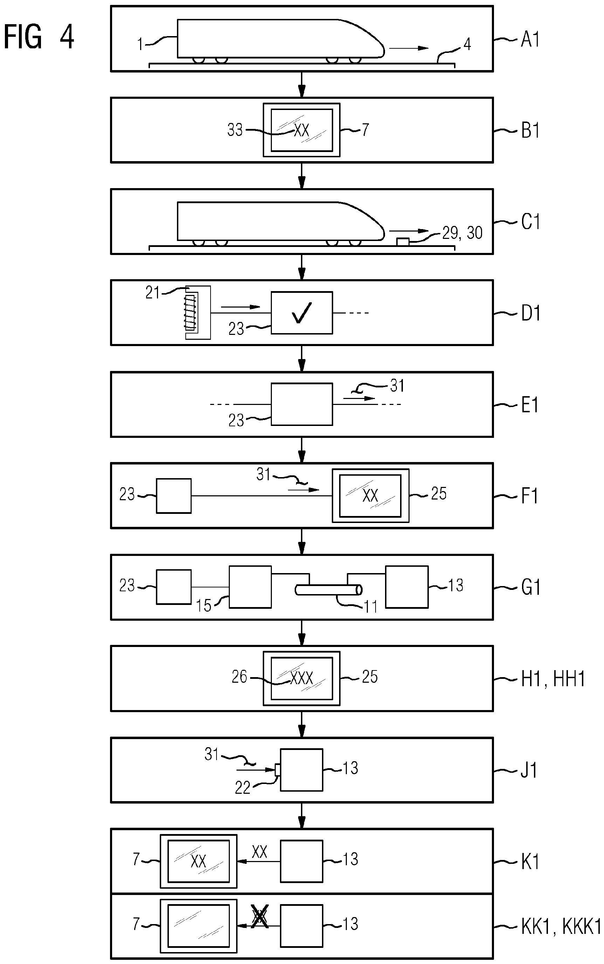

Figur 4 zeigt schematisch den Ablauf eines ersten Ausführungsbeispiels des erfindungsgemäßen Verfahrens. Gleiche und funktionsgleiche Elemente des in Figur 1 gezeigten spurgebundenen Fahrzeugs 1, des in Figur 2 gezeigten Fahrerassistenzsystems 27 sowie des in Figur 3 gezeigten Führerpults 9 werden in Bezug auf Figur 4 mit denselben Bezugszeichen versehen.

In einem Verfahrensschritt A1 bewegt sich das spurgebundene Fahrzeug 1 auf einer Fahrtstrecke 4. Die Fahrerassistenzanzeigeeinheit 7 zeigt eine Fahrerassistenzinformation 33, nämlich die in Figur 2 dargestellte Geschwindigkeitsempfehlung XX in einem Verfahrensschritt B1 an. Das Anzeigen der Fahrerassistenzinformation 33 wird mittels der Fahrzeugsteuereinrichtung 13 gesteuert. Das Steuern umfasst ein Ein- und Ausblenden der Fahrerassistenzinformation 33 auf der Fahrerassistenzanzeigeeinheit 7. Zudem kann mittels der Fahrzeugsteuereinrichtung 13 der Inhalt der Fahrerassistenzinformation 33 vorgegeben werden. In einem Verfahrensschritt C1 passiert das spurgebundene Fahrzeug 1 eine landseitige Streckeneinrichtung 29 des Zugbeeinflussungssystems 19. Die Streckeneinrichtung 29 ist ein Gleismagnet 30 einer sogenannten punktförmigen Zugbeeinflussung (PZB).

Der Fahrzeugmagnet 21 ist Teil eines Schwingkreises, welcher mit Wechselstrom der Frequenzen 500, 1 000 und 2 000 Hz gespeist wird. Bei dem Passieren der Streckeneinrichtung 29 induziert der Fahrzeugmagnet 21 in dem Gleismagneten 30 einen Stromfluss. Ist der Gleismagnet 30 auf die Frequenz des Schwingkreises des Fahrzeugs abgestimmt, bewirkt eine Resonanz, dass dem Schwingkreis des Fahrzeugs 1 über den Fahrzeugmagneten 21 Energie entzogen wird. Dies führt zu einem Stromabfall im Fahrzeugmagneten 21, welcher mittels der Fahrzeugeinrichtung 23 in einem Verfahrensschritt D1 erfasst wird.

In einem Verfahrensschritt E1 erzeugt die Fahrzeugeinrichtung 23 ein Zugbeeinflussungssignal 31, welches in einem Verfahrensschritt F1 über den Fahrzeugbus 17 an die Zugbeeinflussungsanzeigeeinheit 25 übertragen wird. Das Erzeugen des Zugbeeinflussungssignals 31 hängt von der Resonanzfrequenz des Schwingkreises des Gleismagneten 30 ab.

Zudem wird das Zugbeeinflussungssignal 31 in einem Verfahrensschritt G1 über den Fahrzeugbus 17, die Gateway-Einheit 15 und das Fahrzeugsteuernetz 11 an die Fahrzeugsteuereinrichtung 13 übertragen.

Eine Zugbeeinflussungsinformation 26 wird anhand des Zugbeeinflussungssignals 31 in einem Verfahrensschritt H1 erzeugt. Mittels der Zugbeeinflussungsanzeigeeinheit 25 wird die Zugbeeinflussungsinformation 26 (dargestellt als "XXX") in einem Verfahrensschritt HH1 angezeigt. Die Zugbeeinflussungsanzeigeeinheit 25 wird fachmännisch häufig als Driver Machine Interface (DMI) bezeichnet.

In einem Verfahrensschritt J1 empfängt die Fahrzeugsteuereinrichtung 13 das Zugbeeinflussungssignal 31 über die datentechnische Schnittstelle 22. Die Fahrzeugsteuereinrichtung 13 umfasst eine Recheneinheit 14, welche ausgebildet ist, ein auf einer Speichereinrichtung 16 der Fahrzeugsteuereinrichtung 13 gespeichertes Computerprogramm auszuführen. Die Fahrzeugsteuereinrichtung 13 ist ausgebildet, in einem Verfahrensschritt K1 mittels einer durch das Computerprogramm implementierten Logik anhand des empfangenen Zugbeeinflussungssignals 31 das Anzeigen der Fahrerassistenzinformation (dargestellt als Geschwindigkeitsempfehlung "XX") zu steuern.

Da die Zugbeeinflussungsinformation 26 mittels der Zugbeeinflussungsanzeigeeinheit 25 angezeigt wird, kann sich ein Widerspruch zu der mittels der Fahrerassistenzanzeigeeinheit 7 angezeigten Geschwindigkeitsempfehlung XX ergeben. Um diesen Widerspruch zu beheben, wird gemäß dem ersten Ausführungsbeispiel in einem Verfahrensschritt KK1 mittels der Fahrzeugsteuereinrichtung 13 gesteuert, dass die Geschwindigkeitsempfehlung XX in einem Verfahrensschritt KKK1 ausgeblendet wird.

In dem in Bezug auf Figur 4 beschriebenen Ausführungsbeispiel ist die im Verfahrensschritt C2 passierte Streckeneinrichtung 29 ein auf die Frequenz 1 000 Hz abgestimmter Gleismagnet. Anhand des im Verfahrensschritt E1 von der Fahrzeugeinrichtung 23 erzeugte Zugbeeinflussungssignals 31, welches im Verfahrensschritt J1 von der Fahrzeugsteuereinrichtung 13 empfangen wird, erkennt die Fahrzeugsteuereinrichtung 13, dass eine Geschwindigkeitsüberwachung (sogenannte 1 000 Hz-Überwachungskurve) durchgeführt wird. Diese Geschwindigkeitsüberwachung wird mittels der Zugbeeinflussungsanzeigeeinheit 25 als Zugbeeinflussungsinformation 26 angezeigt. Ein Widerspruch, der sich aus der gleichzeitigen Anzeige der Zugbeeinflussungsinformation 26 mittels der Zugbeeinflussungsanzeigeeinheit 25 und der Anzeige der Geschwindigkeitsempfehlung XX mittels der Fahrerassistenzanzeigeeinheit 7 für den Fahrzeugführer 5 ergibt, wird dadurch behoben, dass die Geschwindigkeitsempfehlung XX im Verfahrensschritt KKK1 ausgeblendet wird. Das Ausblenden der Geschwindigkeitsempfehlung XX wird durch die Fahrzeugsteuereinrichtung 13 gesteuert. Die Entscheidung, ob die Geschwindigkeitsempfehlung XX ausgeblendet werden soll, trifft die Fahrzeugsteuereinrichtung 13 anhand des empfangenen Zugbeeinflussungssignals 31.

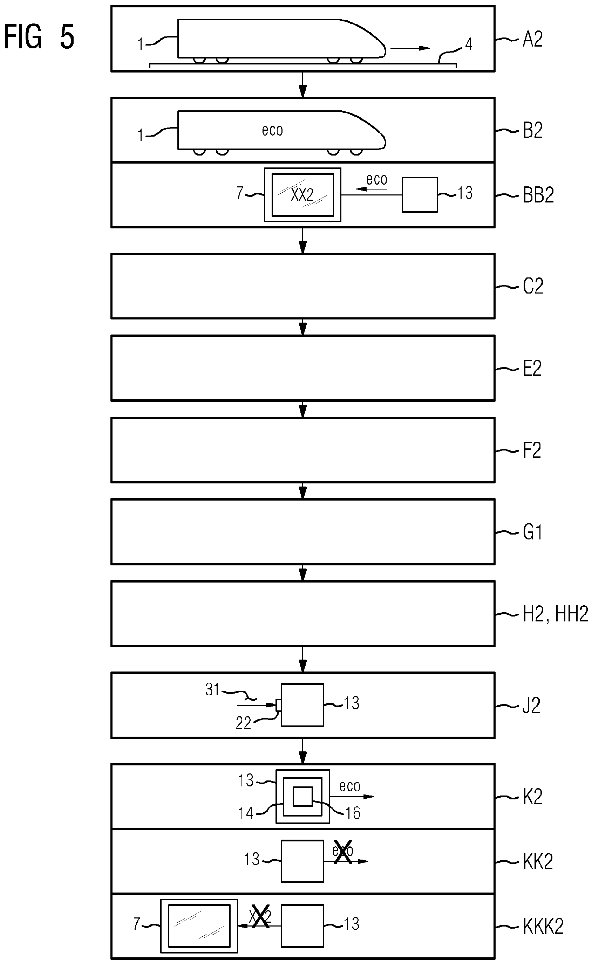

Figur 5 zeigt schematisch den Ablauf eines zweiten Ausführungsbeispiels des erfindungsgemäßen Verfahrens. Gleiche und funktionsgleiche Elemente des in Figur 1 gezeigten spurgebundenen Fahrzeugs 1, des in Figur 2 gezeigten Fahrerassistenzsystems 27, des in Figur 3 gezeigten Führerpults 9 sowie des in Figur 4 gezeigten ersten Ausführungsbeispiels werden in Bezug auf Figur 5 mit denselben Bezugszeichen versehen.

In einem Verfahrensschritt A2 bewegt sich das spurgebundene Fahrzeug 1 auf einer Fahrtstrecke 4. Das spurgebundene Fahrzeug 1 wird gemäß einem Verfahrensschritt B2 in einem energiesparenden Betriebsmodus betrieben (dargestellt als "eco"). Bei dem Betrieb des spurgebundenen Fahrzeugs 1 in dem energiesparenden Betriebsmodus wird das Fahrerassistenzsystem 27 in einem Verfahrensschritt BB2 entsprechend dem energiesparenden Betriebsmodus betrieben. Hierzu wird beispielsweise als Fahrempfehlung eine für den energiesparenden Betrieb empfohlene Geschwindigkeitsempfehlung XX2 mittels der Fahrerassistenzanzeigeeinheit 7 angezeigt.

Die Verfahrensschritte C2 bis HH2 verlaufen analog zu den in Bezug auf Figur 4 beschriebenen Verfahrensschritten C1 bis HH1 des ersten Ausführungsbeispiels.

In einem Verfahrensschritt J2 empfängt die Fahrzeugsteuereinrichtung 13 das Zugbeeinflussungssignal 31 über die datentechnische Schnittstelle 22. Die Fahrzeugsteuereinrichtung 13 umfasst eine Recheneinheit 14, welche ausgebildet ist ein auf einer Speichereinrichtung 16 der Fahrzeugsteuereinrichtung 13 gespeichertes Computerprogramm auszuführen. Die Fahrzeugsteuereinrichtung 13 ist ausgebildet, in einem Verfahrensschritt K2 mittels einer durch das Computerprogramm implementierten Logik anhand des empfangenen Zugbeeinflussungssignals 31 das Anzeigen der Fahrerassistenzinformation sowie das Einnehmen und Verlassen des energiesparenden Betriebsmodus zu steuern.

Da die Zugbeeinflussungsinformation 26 mittels der Zugbeeinflussungsanzeigeeinheit 25 angezeigt wird, kann sich ein Widerspruch zu der mittels der Fahrerassistenzanzeigeeinheit 7 angezeigten Geschwindigkeitsempfehlung XX2 für einen energiesparenden Betriebsmodus ergeben. Um diesen Widerspruch zu beheben, wird gemäß dem zweiten Ausführungsbeispiel in einem Verfahrensschritt KK2 mittels der Fahrzeugsteuereinrichtung 13 gesteuert, dass der energiesparende Betriebsmodus verlassen wird. Entsprechend wird die den energiesparenden Betriebsmodus unterstützende Fahrempfehlung auf der Fahrerassistenzanzeigeeinheit 7 in einem Verfahrensschritt KKK2 ausgeblendet.

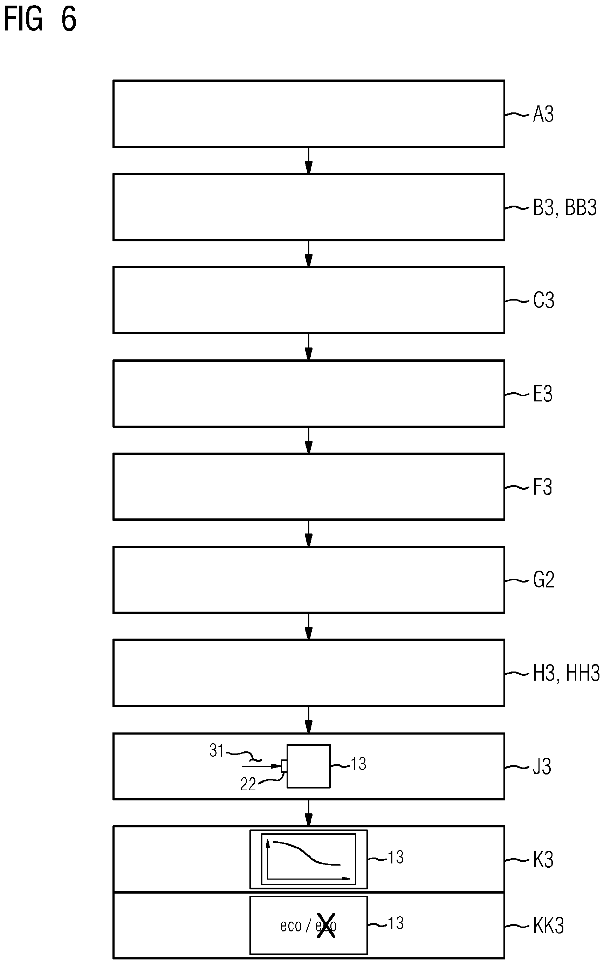

Figur 6 zeigt schematisch den Ablauf eines dritten Ausführungsbeispiels des erfindungsgemäßen Verfahrens. Gleiche und funktionsgleiche Elemente des in Figur 1 gezeigten spurgebundenen Fahrzeugs 1, des in Figur 2 gezeigten Fahrerassistenzsystems 27, des in Figur 3 gezeigten Führerpults 9 sowie der in Figur 4 und 5 gezeigten ersten Ausführungsbeispiele werden in Bezug auf Figur 6 mit denselben Bezugszeichen versehen.

Die Verfahrensschritte A3 bis HH3 verlaufen analog zu den in Bezug auf Figur 5 beschriebenen Verfahrensschritten A2 bis HH2 des zweiten Ausführungsbeispiels.

In einem Verfahrensschritt J3 empfängt die Fahrzeugsteuereinrichtung 13 das Zugbeeinflussungssignal 31 über die datentechnische Schnittstelle 22. Die Fahrzeugsteuereinrichtung 13 umfasst eine Recheneinheit 14, welche ausgebildet ist ein auf einer Speichereinrichtung 16 der Fahrzeugsteuereinrichtung 13 gespeichertes Computerprogramm auszuführen. Die Fahrzeugsteuereinrichtung 13 ist ausgebildet, in einem Verfahrensschritt K3 mittels eines durch das Computerprogramm implementierten Algorithmus anhand des empfangenen Zugbeeinflussungssignals 31 eine mittels des Zugbeeinflussungssystems 19 erzeugte Überwachungskurve nachzubilden. Anhand der nachgebildeten Überwachungskurve wird in einem Verfahrensschritt KK3 ermittelt, ob der energiesparende Betriebsmodus verlassen wird. Beispielsweise kann die Fahrzeugsteuereinrichtung 13 das Bremsverhalten des Fahrzeugs 1 im energiesparenden Betriebsmodus überwachen und prognostizieren, ob das zu erwartende Bremsverhalten im energiesparenden Betriebsmodus zur Einhaltung der Überwachungskurve ausreicht. Wird im energiesparenden Betriebsmodus beispielsweise zu zögerlich derart gebremst, dass ein Überschreiten der durch die Überwachungskurve vorgegebenen Fahrtgeschwindigkeit zu erwarten ist, wird der energiesparende Betriebsmodus verlassen, um eine höhere Gesamtbremskraft auf die Achsen des Fahrzeugs ausüben zu können.

## Patentansprüche

1. Verfahren zum Betrieb eines Fahrerassistenzsystems (27) für ein spurgebundenes Fahrzeug (1), bei welchem
das Fahrerassistenzsystem (27) in Abhängigkeit eines mittels eines Zugbeeinflussungssystems (19) erzeugten Zugbeeinflussungssignals (31) betrieben wird,
mit den folgenden Verfahrensschritten:
Betreiben (B2, B3) des spurgebundenen Fahrzeugs (1) in einem energiesparenden Betriebsmodus und **gekennzeichnet durch**
Nachbilden (K3) einer mittels des Zugbeeinflussungssystems (19) erzeugten Überwachungskurve mittels einer Fahrzeugsteuereinrichtung (13),
wobei mittels der Fahrzeugsteuereinrichtung (13) anhand der nachgebildeten Überwachungskurve ermittelt wird (KK3), ob der energiesparende Betriebsmodus verlassen wird.

2. Verfahren nach Anspruch 1,
**dadurch gekennzeichnet, dass**
ein Anzeigen (B1) einer Fahrerassistenzinformation (33) mittels einer Fahrerassistenzanzeigeeinheit (7) des Fahrerassistenzsystems (27) in Abhängigkeit des Zugbeeinflussungssignals (31) gesteuert wird (KK1).

3. Verfahren nach Anspruch 2,
**dadurch gekennzeichnet, dass**
die Fahrerassistenzanzeigeeinheit (7) in ein Führerpult (9) des spurgebundenen Fahrzeugs (1) integriert ist und
eine Zugbeeinflussungsinformation (26) mittels einer Zugbeeinflussungsanzeigeeinheit (25), die in das Führerpult (9) des spurgebundenen Fahrzeugs (1) integriert ist, angezeigt wird (HH1), wobei die Zugbeeinflussungsinformation (26) anhand des Zugbeeinflussungssignals (31) erzeugt wird (H1).

4. Verfahren nach Anspruch 2 oder 3,
**dadurch gekennzeichnet, dass**
die Fahrerassistenzinformation (33) eine Fahrempfehlung (XX) repräsentiert und
- die Fahrempfehlung ausgeblendet wird (KKK1) und/oder
- eine Hinweismeldung, welche auf das Zugbeeinflussungssignal (31) hinweist, angezeigt wird,
wenn das Zugbeeinflussungssignal (31) eine Restriktion des Betriebs des spurgebundenen Fahrzeugs (1) auslöst.

5. Verfahren nach Anspruch 4,
**dadurch gekennzeichnet, dass**
die Restriktion eine Geschwindigkeitsüberwachung der Fahrtgeschwindigkeit des spurgebundenen Fahrzeugs (1) umfasst.

6. Verfahren nach wenigstens einem der vorhergehenden Ansprüche,
**gekennzeichnet durch**
Betreiben (B2) des spurgebundenen Fahrzeugs (1) in dem energiesparenden Betriebsmodus und
Betreiben (BB2) des Fahrerassistenzsystems (27) in Abhängigkeit des energiesparenden Betriebsmodus,
wobei der energiesparende Betriebsmodus verlassen wird (KK2), wenn das Zugbeeinflussungssignal (31) eine Restriktion des Betriebs des spurgebundenen Fahrzeugs (1) auslöst.

7. Verfahren nach Anspruch 6,
**dadurch gekennzeichnet, dass**
das spurgebundene Fahrzeug (1) ein Druckluftbremssystem (10) und ein elektrodynamisches Bremssystem (18) mit Bremsenergierückgewinnung aufweist, wobei der energiesparende Betriebsmodus ein Betriebsmodus ist, bei welchem ausschließlich das elektrodynamische Bremssystem (18) zum Bremsen des spurgebundenen Fahrzeugs (1) verwendet wird.

8. Verfahren nach Anspruch 7,
**dadurch gekennzeichnet, dass**
die Gesamtbremskraft bei Verlassen (KK2) des energiesparenden Betriebsmodus auf eine höhere Anzahl von Achsen (12) des spurgebundenen Fahrzeugs als im energiesparenden Betriebsmodus verteilt wird.

9. Verfahren nach wenigstens einem der vorhergehenden Ansprüche,
**dadurch gekennzeichnet, dass**
das Zugbeeinflussungssystem (19) eine induktive Zugbeeinflussung, vorzugsweise punktförmige Zugbeeinflussung umfasst.

10. Verfahren nach wenigstens einem der vorhergehenden Ansprüche 2 bis 9,
**dadurch gekennzeichnet, dass**
das Zugbeeinflussungssignal (31) mittels einer Fahrzeugeinrichtung (23) des Zugbeeinflussungssystems (19) erzeugt wird und ausgehend von der Fahrzeugeinrichtung (23) an eine Fahrzeugsteuereinrichtung (13) übertragen wird und
die Fahrzeugsteuereinrichtung (13) das Anzeigen der Fahrerassistenzinformation (33) in Abhängigkeit des Zugbeeinflussungssignals (31) steuert.

11. Verfahren nach Anspruch 10,
**dadurch gekennzeichnet, dass**
die Fahrzeugeinrichtung (23) des Zugbeeinflussungssystems (19) erfasst (D), dass das spurgebundene Fahrzeug (1) eine Streckeneinrichtung (29) des Zugbeeinflussungssystems (19) passiert (C), und
das Zugbeeinflussungssignal (31) in Abhängigkeit der passierten Streckeneinrichtung (29) erzeugt wird.

12. Computerprogramm mit Programmcode zur Durchführung des Verfahrens nach wenigstens einem der vorhergehenden Ansprüche 1 bis 11, wenn das Computerprogramm auf einer Recheneinheit (14) einer Fahrzeugsteuereinrichtung (13) ausgeführt wird.

## Claims

1. Method for operating a driver assistance system (27) for a track-bound vehicle (1),
in which
the driver assistance system (27) is operated as a function of an automatic train control signal (31) generated by means of an automatic train control system (19),
with the following method steps:
operating (B2, B3) the track-bound vehicle (1) in an energy-saving operating mode and **characterised by**
reproducing (K3) a monitoring curve generated by means of the automatic train control system (19) by means of a vehicle control facility (13),
wherein it is determined (KK3) by means of the vehicle control facility (13) using the reproduced monitoring curve whether the energy-saving operating mode is left.

2. Method according to claim 1,
**characterised in that**
a display (B1) of an item of driver assistance information (33) is controlled (KK1) by means of a driver assistance display unit (7) of the driver assistance system (27) as a function of the automatic train control signal (31).

3. Method according to claim 2,
**characterised in that**
the driver assistance display unit (7) is integrated into a driver's console (9) of the track-bound vehicle (1) and an item of automatic train control information (26) is displayed (HH1) by means of an automatic train control display unit (25), which is integrated into the driver's console (9) of the track-bound vehicle (1), wherein the item of automatic train control information (26) is generated (H1) on the basis of the automatic train control signal (31).

4. Method according to claim 2 or 3,
**characterised in that**
the driver assistance information (33) represents a driving recommendation (XX) and
- the driving recommendation is faded out (KKK1) and/or
- an error message which indicates the automatic train control signal (31) is displayed,
if the automatic train control signal (31) triggers a restriction of the operation of the track-bound vehicle (1).

5. Method according to claim 4,
**characterised in that**
the restriction comprises a speed monitoring of the driving speed of the track-bound vehicle (1).

6. Method according to at least one of the preceding claims, **characterised by**
operating (B2) the track-bound vehicle (1) in the energy-saving operating mode and
operating (BB2) the driver assistance system (27) as a function of the energy-saving operating mode,
wherein the energy-saving operating mode is left (KK2) when the automatic train control signal (31) triggers a restriction of the operation of the track-bound vehicle (1).

7. Method according to claim 6,
**characterised in that**
the track-bound vehicle (1) has a compressed air brake system (10) and an electrodynamic brake system (18) with braking energy recovery, wherein the energy-saving operating mode is an operating mode in which the electrodynamic brake system (18) is used exclusively to brake the track-bound vehicle (1).

8. Method according to claim 7,
**characterised in that**
when leaving (KK2) the energy-saving operating mode, the overall braking force is allocated to a higher number of axles (12) of the track-bound vehicle than in the energy-saving operating mode.

9. Method according to at least one of the preceding claims, **characterised in that**
the automatic train control system (19) comprises an inductive automatic train control, preferably intermittent automatic train control.

10. Method according to at least one of the preceding claims 2 to 9,
**characterised in that**
the automatic train control signal (31) is generated by means of vehicle equipment (23) of the automatic train control system (19) and is transmitted starting from the vehicle equipment (23) to a vehicle control facility (13) and
the vehicle control facility (13) controls the display of driver assistance information (33) as a function of the automatic train control signal (31).

11. Method according to claim 10,
**characterised in that**
the vehicle equipment (23) of the automatic train control system (19) detects (D) that the track-bound vehicle (1) passes trackside equipment (29) of the automatic train control system (19), and
the automatic train control signal (31) is generated as a function of the trackside equipment (29) passed.

12. Computer program with program code for carrying out the method according to at least one of the preceding claims 1 to 11 when the computer program is executed on a computer unit (14) of a vehicle control facility (13).

## Revendications

1. Procédé pour faire fonctionner un système (27) d'aide à la conduite pour un véhicule (1) guidé sur rail,
dans lequel
on fait fonctionner le système (27) d'aide à la conduite en fonction d'un signal (31) de commande automatique des trains produit au moyen d'un système (19) de commande automatique des trains,
comprenant les stades de procédé suivants :
on fait fonctionner (B2, B3) le véhicule (1) guidé sur rail dans un mode de fonctionnement économisant de l'énergie et
**caractérisé en ce que** l'on simule (K3), au moyen d'un dispositif (13) de conduite de véhicule, une courbe de contrôle produite au moyen du système (19) de commande automatique des trains,
dans lequel au moyen du dispositif (13) de conduite de véhicule, on détermine (KK3) à l'aide de la courbe de contrôle simulée, si l'on a quitté le mode de fonctionnement économisant de l'énergie.

2. Procédé suivant la revendication 1,
**caractérisé en ce que** l'
on commande (KK1), en fonction du signal (31) de commande automatique des trains, une indication (B1) d'une information (33) d'aide à la conduite au moyen d'une unité (7) d'indication d'aide à la conduite du système (27) d'aide à la conduite.

3. Procédé suivant la revendication 2,
**caractérisé en ce que**
l'unité (7) d'indication d'aide à la conduite est intégrée dans un pupitre (9) de conduite du véhicule (1) guidé sur rail et
on indique (HH1) une information (26) de conduite automatique des trains, au moyen d'une unité (25) d'indication de conduite automatique des trains, qui est intégrée dans le pupitre (9) de conduite du véhicule (1) guidé sur rail, dans lequel on produit (H1) l'information (26) de conduite automatique des trains à l'aide du signal (31) de commande automatique des trains.

4. Procédé suivant la revendication 2 ou 3,
**caractérisé en ce que**
l'information (33) d'aide à la conduite représente une recommandation (XX) de circulation et
- on supprime (KKK1) l'information de circulation et/ou
- on affiche un message de renvoi, qui renvoie au signal (31) de commande automatique des trains,
si le signal (31) de commande automatique des trains déclenche une restriction du fonctionnement du véhicule (1) guidé sur rail.

5. Procédé suivant la revendication 4,
**caractérisé en ce que**
la restriction comprend un contrôle de la vitesse de circulation du véhicule (1) guidé sur rail.

6. Procédé suivant au moins l'une des revendications précédentes,
**caractérisé en ce que** l'
on fait fonctionner (B2) le véhicule (1) guidé sur rail dans le mode de fonctionnement économisant de l'énergie et
on fait fonctionner (BB2) le système (27) d'aide à la conduite en fonction du mode de fonctionnement économisant de l'énergie, dans lequel on quitte (KK2) le mode de fonctionnement économisant de l'énergie, si le signal (31) de commande automatique des trains déclenche une restriction du fonctionnement du véhicule (1) guidé sur rail.

7. Procédé suivant la revendication 6,
**caractérisé en ce que**
le véhicule (1) guidé sur rail a un système (10) de freinage à air comprimé et un système (18) de freinage électrodynamique à récupération de l'énergie de freinage, dans lequel le mode de fonctionnement économisant de l'énergie est un mode de fonctionnement, dans lequel on utilise exclusivement le système (18) de freinage électrodynamique pour freiner le véhicule (1) guidé sur rail.

8. Procédé suivant la revendication 7,
**caractérisé en ce que** l'
on répartit la force d'ensemble de freinage lorsque l'on quitte (KK2) le mode de fonctionnement économisant de l'énergie sur un nombre d'essieux (12) du véhicule guidé sur rail plus grand que dans le mode de fonctionnement économisant de l'énergie.

9. Procédé suivant au moins l'une des revendications précédentes,
**caractérisé en ce que**
le système (19) de commande automatique des trains comprend une commande automatique des trains par induction, de préférence une commande intermittente des trains.

10. Procédé suivant au moins l'une des revendications 2 à 9 précédentes,
**caractérisé en ce que** l'
on produit le signal (31) de commande automatique des trains au moyen d'un dispositif (23) de véhicule du système (19) de commande automatique des trains et
on le transmet à un dispositif (13) de conduite de véhicule à partir du dispositif (23) de véhicule et
le dispositif (13) de conduite de véhicule commande l'affichage de l'information (33) d'aide à la conduite, en fonction du signal (31) de commande automatique des trains.

11. Procédé suivant la revendication 10,
**caractérisé en ce que**
le dispositif (23) de véhicule du système (19) de commande automatique des trains détecte (D), que le véhicule (1) guidé sur rail passe (C) devant un dispositif (29) de voie du système (19) de commande automatique des trains, et
on produit le signal (31) de commande automatique des trains en fonction du dispositif (29) de voie devant lequel le véhicule est passé.

12. Programme d'ordinateur comprenant des codes de programme pour effectuer le procédé suivant au moins l'une des revendications 1 à 11 précédentes, lorsque le programme d'ordinateur est exécuté sur une unité (14) informatique d'un dispositif (13) de conduite de véhicule.
